# EUROPÄISCHE PATENTSCHRIFT

(11) **EP 0 695 584 B1**
(45) Veröffentlichungstag und Bekanntmachung des Hinweises auf die Patenterteilung: **04.04.2001**
(21) Anmeldenummer: 95108965.5
(22) Anmeldetag: 10.06.1995
(51) Int. Cl.: B41F 23/06, B05B 7/14, B05B 15/04, B05B 5/08, B05B 5/057

(54) **Puderbestäubungsgerät**
Dusting apparatus
Appareil de poudrage

(30) Priorität: 06.08.1994 DE 4427904
(43) Veröffentlichungstag der Anmeldung: 07.02.1996
(73) Patentinhaber: PLATSCH, Hans G., 70565 Stuttgart (DE)
(72) Erfinder: PLATSCH, Hans G., 70565 Stuttgart (DE)
(74) Vertreter: Ostertag, Reinhard

(56) Entgegenhaltungen:
- EP-A- 0 074 045
- EP-A- 0 578 426
- FR-A- 1 029 916
- US-A- 3 556 519
- US-A- 4 024 815
- US-A- 4 111 154

## Beschreibung

Die Erfindung betrifft ein Puderbestäubungsgerät gemäß dem Oberbegriff des Anspruches 1.

Ein Metallpartikel-Bestäubungsgerät ist aus der FR-A- 1 029 916 als Teil einer Maschine zum Bedrucken von Stoffbahnen mit Metallpulvern bekannt. Bei ihm durchsetzt ein die Unterseite der Stoffbahn mit einem Metallpartikel mitschleppendem Gasstrom beaufschlagendes Rohr einen Saugkasten, der in Förderrichtung der Stoffbahn gesehen große Abmessungen hat. Durch den Stoff hindurch wird Luft in den Saugkasten angesaugt, und diese Luft nimmt Metallpartikel, die nicht durch ein zuvor aufgetragenes Klebstoffmuster an der Stoffbahn festhängen, mit und führt sie einem einen Sauggebläse vorgeschalteten Zyklon zu.

In der EP-A- 0 074 045 ist ein Puderbestäubungsgerät offenbart, bei welchem in einem Bestäubungstisch ein Pudergaskanal ausgebildet ist, der im wesentlichen parallel zur Tischoberfläche verläuft und ein in die Tischoberfläche ausmündendes Puderabgabefenster aufweist. Durch letzteres tritt Puderpartikel enthaltendes Gas mit niederer Geschwindigkeit gegen die Unterseite eines über die Tischoberfläche hinweggeförderten zu bestäubenden Produktes aus.

In der US-A- 4 111 154 ist ein Gerät offenbart, mit welchem ein mit einer flüssigen Zinkbeschichtung versehenes Blech mit Zinkpartikeln bestäubt wird, so daß eine große Anzahl von Kristallisationskeimen für das flüssige Zink vorliegt, wodurch man keine großflächigen Kristallmuster auf der beschichteten Oberfläche erhält. Die in einem Luftstrom getragenen Zinkpartikel werden durch Sprühköpfe, die beidseits des beschichteten Bleches angeordnet sind, jeweils durch eine Abgabeöffnung abgegeben, die in Förderrichtung gesehen bei der Mitte des Sprühkopfes liegen, während bei den Enden des Sprühkopfes Absaugöffnungen vorgesehen sind, welche Luft und vom beschichteten Blech nicht angenommene Metallpartikel zur Wiederverwendung absaugen.

Durch die vorliegende Erfindung soll ein Puderbestäubungsgerät geschaffen werden, welches zum Bestäuben der Unterseite von Produkten geeignet ist und eine zuverlässige und gleichförmige Bestäubung der Produkte gewährleistet.

Diese Aufgabe ist erfindungsgemäß gelöst durch ein Puderbestäubungsgerät, mit den im Anspruch 1 angegebenen Merkmalen.

Die zuverlässige und gleichförmige Bestäubung der Produkte wird bei dem erfindungsgemäßen Puderbestäubungsgerät daher erhalten, da unmittelbar vor dem Kontakt zwischen dem Pudergas und der Produktoberfläche nochmals eine intensive Durchmischung stattfindet. Ein weiterer Vorteil der erfindungsgemäßen Lösung ist der, daß man zwischen dem in der Regel entfernt von der Blasleiste aufgestellten Pudergasgenerator und der Bestäubungsleiste keine Leitung mit großem Querschnitt zu verlegen braucht.

Die gängigen in Verbindung mit Druckmaschinen verwendeten Puderbestäubungsgeräte bestäuben die Oberseite der Produkte. Dies hat den Vorteil, daß der abgegebene Puder unter Schwerkrafteinwirkung auf der Produktoberfläche liegenbleibt.

Handelt es sich bei den Produkten um solche, die unter Verwendung von von Ketten getragenen Greifern transportiert werden, wie dies z. B. bei Druckbogen der Fall ist, so müssen die Bestäubungsleisten der Puderbestäubungsgeräte unter verhältnismäßig großem Abstand über der Oberseite der Produkte angeordnet werden, damit die Greiferleisten unbehindert unter ihnen hindurchlaufen können. Ein großer Abstand zwischen der Bestäubungsleiste und der Produktoberseite ist aber im Hinblick auf ein effektives Überstellen des Puders von der Bestäubungsleiste zur Produktoberfläche und auch im Hinblick auf ein gutes Abdichten des Puderbestäubungsgerätes gegen die Umgebung nachteilig.

Es wurde nun herausgefunden, daß man ein effektives und ein Zusammenhaften übereinandergelegter Produkte zuverlässig vermeidendes Bestäuben von Produkten auch dann erhält, wenn man das Bestäubungsgerät so anordnet, daß es mit der Unterseite der Produkte zusammenarbeitet. Man braucht dann keinen nennenswerten Abstand zwischen der zu bestäubenden Oberfläche und der Bestäubungsleiste einzuhalten, und durch diesen nun sehr viel kleineren Abstand wird ein so viel effektiveres Bestäuben erhalten, daß man den Nachteil der nun entgegenwirkenden Schwerkraft ohne weiteres in Kauf nehmen kann. Was das Zusammenbacken von Produkten in einem Stapel betrifft, ist es letztendlich gleichgültig, ob die Oberseite oder die Unterseite bestäubt ist.

Vorteilhafte Weiterbildungen des erfindungsgemäßen Puderbestäubungsgerätes sind Gegenstand der Unteransprüche.

Die Weiterbildung der Erfindung gemäß Anspruch 2 ist im Hinblick auf ein gutes Bestäuben und ein Vermeiden von Kurzschluß-Leckpfaden, die direkt von der Bestäubungsleiste zu den Absaugkanälen führen, während des normalen Arbeitens des Puderbestäubungsgerätes von Vorteil. Darüber hinaus erhält man eine gleichförmige Abstützung des Produktes im Bereich der Bestäubungsleiste und der Absaugkanäle.

Die Weiterbildung der Erfindung gemäß Anspruch 3 ist im Hinblick auf das Vermeiden von Ablagerungen und das Vermeiden einer Entmischung des Pudergasstromes von Vorteil.

Mit der Weiterbildung der Erfindung gemäß Anspruch 4 wird erreicht, daß die Produkte über ihre gesamte Breite hinweg gleichförmig bestäubt werden.

Auch die Weiterbildung der Erfindung gemäß Anspruch 5 dient einer gleichförmigen Vermischung von Puder und Trägergas, da das vom Pudergasgenerator abgegebene pulverreiche Gemisch im Gegenstrom in den der Bestäubungsleiste zugeführten Gasstrom eingespeist wird.

Auch die Verwirbelung des Pudergases in der Mischkammer gemäß Anspruch 6 dient einer gleichförmigen Durchmischung desselben.

Das elektrische Aufladen der Puderpartikel gemäß Anspruch 7 erfolgt im Hinblick auf ein verbessertes Haften der Puderpartikel an der Produktoberfläche.

Demselben Zweck dient auch die elektrische Aufladung der Produktunterseite gemäß Anspruch 8.

Wählt man die Polarität der Aufladung von Puderpartikeln und Produktoberfläche gemäß Anspruch 9, erhält man einerseits ein besonders starkes Anziehen der Puderpartikel und andererseits eine Ladungskompensation im fertigen Produkt.

Die Weiterbildung der Erfindung gemäß Anspruch 10 ermöglicht es, das Pudergas unter verhältnismäßig großem Druck bzw. mit scharfen Geschwindigkeit aus der Bestäuungsleiste austreten zu lassen, ohne daß hierdurch eine nennenswerte Verformung der Produkte über der Bestäubungsleiste in Kauf zu nehmen wäre.

Bei einem Bestäubungsgerät gemäß Anspruch 11 erzeugen die Bestäubungsleiste und die dieser gegenüberliegende Blasleiste Luftvorhänge im wesentlichen gleicher Breite. Auf diese Weise kann der von der Blasleiste abgegebene Luftvorhang die Abgabeöffnung der Bestäubungsleiste im wesentlichen fluidisch verschließen, wenn sich zwischen Blasleiste und Bestäubungsleiste kein Produkt befindet. Dies ist im Hinblick auf das Reinhalten der Umgebung des Puderbestäubungsgerätes vorteilhaft.

Die Weiterbildung der Erfindung gemäß Anspruch 12 gestattet es, das Arbeiten des Puderbestäubungsgerätes für diejenigen Zeitspannen gezielt abzuändern, innerhalb welcher sich kein Produkt vor der Bestäubungsleiste befindet.

Dabei kann man dann gemäß Anspruch 13 schon im Inneren des Bestäubungsleiste Vorkehrungen dafür treffen, daß kein oder nur weniger Pudergas durch die Abgabeöffnung abgegeben wird, wenn sich über dieser kein Produkt befindet.

Mit der Weiterbildung der Erfindung gemäß Anspruch 14 wird erreicht, daß das von der Bestäubungsleiste und den Absaugkanälen herabgelaufene hintere Ende des Produktes noch gebremst und definiert gehalten ist, bevor es dann auf einem Stapel abgelegt wird.

Die Weiterbildung der Erfindung gemäß Anspruch 15 erleichtert das Wiederfreigeben des hinteren Blattendes, wenn das blattförmige Produkt seine Endstellung auf dem Produktstapel erreicht hat.

Die Weiterbildung der Erfindung gemäß Anspruch 16 ist im Hinblick auf die Entsorgung nicht benötigten Puders von Vorteil.

Gemäß Anspruch 17 kann man den nicht verbrauchten Puder wieder für die Pudergasherstellung verwenden, wodurch man geringe Betriebskosten des Puderbestäubungsgerätes erhält.

Bei einem Puderbestäubungsgerät gemäß Anspruch 18 ist die durch die Bestäubungsleiste und die Absaugkanäle gebildete Einheit einstückig und besonders kompakt.

Nachstehend wird die Erfindung anhand von Ausführungsbeispielen unter Bezugnahme auf die Zeichnung näher erläutert. In dieser zeigen:
- Figur 1:: eine schematische seitliche, teilweise geschnittene Ansicht einer Ablagestation einer Druckmaschine;
- Figur 2:: einen schematischen vertikalen Schnitt durch eine Bestäubungs- und Absaugeinheit eines Puderbestäubungsgerätes, welches der Ablagestation nach Figur 1 zugeordnet ist; und
- Figur 3:: eine ähnliche Ansicht wie Figur 2, in welcher eine abgewandelte Bestäubungs-/A-bsaugeinheit wiedergegeben ist.

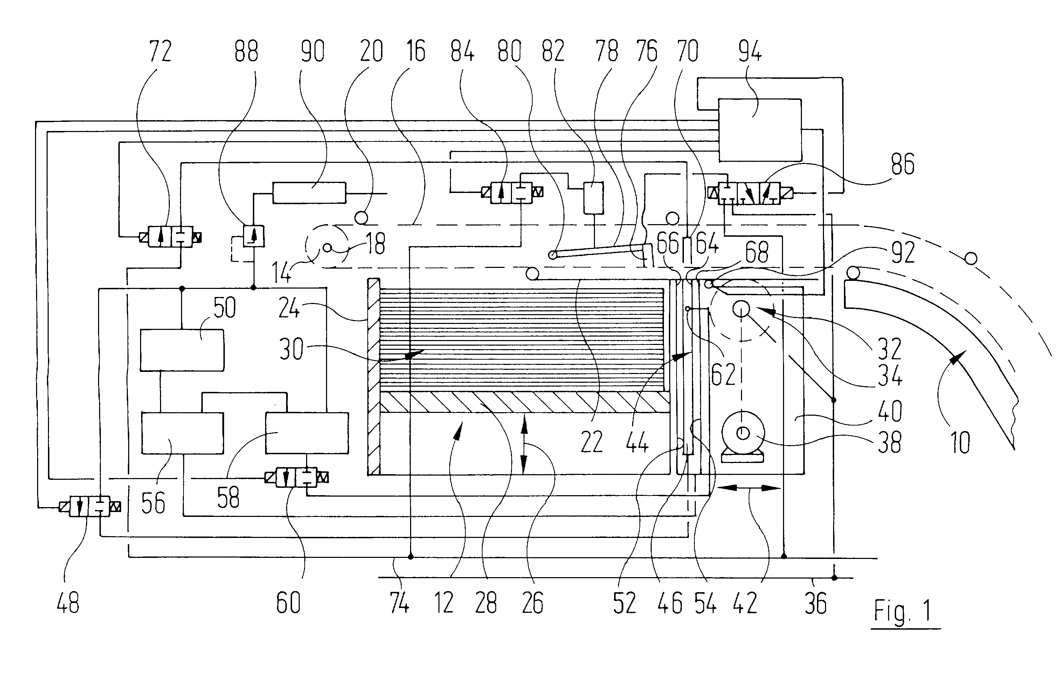

In Figur 1 ist bei 10 schematisch der letzte schräg ansteigende und in die Horizontale umlenkende Abschnitt der Trockenstation einer Druckmaschine wiedergegeben. Mit dem Bezugszeichen 12 ist insgesamt eine Ablagestation bezeichnet. Links über der Ablagestation 12 befindet sich ein Umlenkrad 14 für eine Kette 16. Das Umlenkrad 14 ist über eine Welle 18 mit einem vor der Zeichenebene zu denkenden weiteren Umlenkrad verbunden, über welches ebenfalls eine Kette läuft. Die beiden Ketten 16 tragen jeweils eines der Enden von Greiferstangen 20, die senkrecht zur Zeichenebene verlaufen und jeweils in der Zeichnung nicht wiedergegebene Greifklappen tragen, mit welchen sie die vorderen Enden von Druckbogen 22 ergreifen. Die Ketten 16 sind durch in der Zeichnung ebenfalls nicht wiedergegebene Gleitführungselemente auf dem gestrichelt angedeuteten Weg geführt.

Die Ablagestation 12 umfaßt eine hintere Anschlagwand 24 sowie eine gemäß Pfeil 26 höhenverstellbare Bodenwand 28, welche einen Stapel 30 aus Druckbogen 22 trägt.

Zwischen dem stromaufseitigen Ende der Ablagestation 12 und dem stromabseitigen Ende der Trocknerstation 10 ist eine Saugwalze 32 angeordnet, die als Bogenbremse arbeitet. Eine Umfangswand 34 der Saugwalze 32 ist porös ausgebildet (z. B. Drahtnetz), und das Walzeninnere steht mit einer Unterdruckleitung 36 in Verbindung. Ein die Saugwalze 32 drehender Motor ist bei 38 wiedergegeben. Seine Drehzahl ist so eingestellt, daß die Umfangsfläche der Saugwalze 32 unter etwas geringerer Geschwindigkeit läuft als der Bahngeschwindigkeit der Druckbogen 22 entspricht, so daß auf die Unterseite der Druckbogen eine bremsende Kraft ausgeübt wird.

Die Saugwalze 32 und der Motor 38 sind auf einem Rahmen 40 angeordnet, der längs eines Pfeiles 42 in horizontaler Richtung verstellbar ist, um unterschiedlichen Formaten der Druckbogen 22 Rechnung zu tragen.

Auf dem Rahmen 40 sitzt ferner eine insgesamt mit 44 bezeichnete Bestäubungs-/Absaugeinheit 44. Zu dieser gehört ein schmaler vertikaler Blaskanal 46, der über ein 2/2-Magnetventil 48 mit dem Ausgang eines Gebläses 50 verbindbar ist. Zu beiden Seiten des Blaskanales 46 befindet sich jeweils ein Saugkanal 52 bzw. 54, die unterhalb des Blaskanales 46 in Verbindung stehen und mit dem Einlaß eines Zyklons 56 verbunden sind.

Dessen Leichtfraktions-Auslaß ist mit dem Eingang des Gebläses 50 verbunden. Der Schwerfraktionsauslaß des Zyklons 56 ist mit einem Puder-Speiseeingang eines Pudergasgenerators 58 verbunden, der mit einem Gaseinlaß an den Auslaß des Gebläses 50 angeschlossen ist. Der Pudergasgenerator 58 erzeugt aus in einem zu ihm gehörenden Vorratsbehälter abzogenen Puder und dem über den mit dem Zyklon 56 verbundenen Einlaß erhaltenen Puder und der vom Gebläse 50 erhaltenen Druckluft ein homogenes puderreiches Pudergasgemisch. Bezüglich Einzelheiten des Aufbaues eines solchen Pudergasgenerators wird auf die DE 38 19 203 A1 verwiesen.

Der Auslaß des Pudergasgenerators 58 ist über ein 2/2-Magnetventil 60 mit einem Puderabgaberohr 62 verbunden, das im Blaskanal 46 angeordnet ist.

Wie aus Figur 1 ersichtlich, liegen die oberen Enden der verschiedenen Wände der Bestäubungs-/Absaugeinheit 44 in der Förderebene der Druckbogen 22 und geben so in dieser Ebene einen mittleren Bestäubungsschlitz 64 und zwei in Förderrichtung vor bzw. hinter diesem liegende Absaugschlitze 66, 68 vor.

Über der Bewegungsebene der Ketten 16 und damit auch über der Bahn der Greiferstangen 20 ist mit dem Bestäubungsschlitz 64 fluchtend eine Blasleiste 70 angeordnet, die zu den Wänden des Blaskanales 46 fluchtende seitliche Wände aufweist. Die Blasleiste 70 ist über ein 2/2-Magnetventil 72 mit einer allgemein zur Versorgung der Druckmaschine dienenden Druckluftleitung 74 verbunden.

Stromab des Absaugschlitzes 66 ist über der Förderebene der Druckbogen 22 eine Vakuumleiste 76 vorgesehen, die von Armen 78 getragen ist, die bei 80 verschwenkbar am Maschinenrahmen der Ablagestation 12 gelagert ist. Zum Bewegen der Vakuumleiste 76 zwischen der in der Zeichnung wiedergegebenen Ruhestellung und einer auf der Oberseite der Druckbogen 22 schleifenden Arbeitsstellung ist ein Druckluftzylinder 82 vorgesehen, dessen Kolbenstange federnd in die eingefahrene Stellung vorgespannt ist. Der Arbeitsraum des Druckluftzylinders 82 ist über ein 2/2-Magnetventil 84 ebenfalls mit der Druckluftleitung 74 verbunden.

Der Innenraum der Vakuumleiste 76 ist über ein 3/3-Magnetventil 86 wahlweise mit der Unterdruckleitung 36 und der Druckluftleitung 74 verbindbar.

Der Ausgang des Gebläses 50 ist über ein Überdruckventil 88 und ein Feinfilter 90 mit der Atmosphäre verbunden.

In dem zwischen der Bestäubungs-/Absaugeinheit 44 und der Saugwalze 32 verbleibenden keilförmigen Raum ist ein Bogenfühler 92 vorgesehen, dessen Ausgangssignal erkennen läßt, ob sich vor der Bestäubungs-/Absaugeinheit 44 noch ein Abschnitt eines Druckbogens befindet oder nicht. Das Ausgangssignal des Bogenfühlers 92 ist mit einem Eingang einer Steuereinheit 94 verbunden, welche das Arbeiten der verschiedenen Magnetventile steuert.

Das oben beschriebene Puderbestäubungsgerät arbeitet folgendermaßen:

Die Saugwalze 32 ist bei laufender Druckmaschine ständig mit Unterdruck beaufschlagt. Sowie durch eine Greiferstange 20 ein Druckbogen 22 auf die Umfangsfläche der Saugwalze 32 gezogen wird, wird dieser Bogen an der jeweiligen Berührstelle aufgrund des geringen negativen Schlupfes der Saugrolle nach hinten gezogen, so daß der Druckbogen insgesamt gestreckt wird, bis seine Hinterkante wieder von der Saugwalze abläuft.

Sowie die Vorderkante des Druckbogens 22 den Bogenfühler 92 erreicht, erhält die Steuereinheit 94 ein entsprechendes Anwesenheitssignal. Auf dieses hin veranlaßt die Steuereinheit das Umstellen der Magnetventile 48, 60 und 72 in ihre Arbeitsstellung, und das Magnetventil 86 wird in seiner Ruhestellung belassen. Infolgedessen ist nun der Blaskanal 46 mit Druckluft beaufschlagt, das in ihm angeordnete Puderabgaberohr 62 mit dem vom Pudergasgenerator 56 erzeugten Pudergas beaufschlagt, sind die Saugkanäle 52, 54 mit Unterdruck beaufschlagt und ist die Blasleiste 70 mit Druckluft beaufschlagt. Die Vakuumleiste 76 wird in der angehobenen Ruhestellung gehalten und ist von Vakuum getrennt.

Sowie die Hinterkante des Druckbogens 22 über den Bogenfühler 92 hinweggelaufen ist, wird die Pudergasversorgung des Puderabgaberohres 62 und die Druckluftbeaufschlagung des Blaskanales 46 sowie der Blasleiste 70 beendet. Die Unterdruckbeaufschlagung der Saugkanäle 52, 54 wird dagegen von der Steuereinheit 94 noch um eine Zeitspanne aufrechterhalten, die im Hinblick auf die Fördergeschwindigkeit der Druckbogen 22 gewählt ist. Auf diese weise ist gewährleistet, daß einerseits die Druckbogen noch durch Anlage an den Enden der Saugkanäle 52, 54 gebremst und geführt werden (Teilübernahme der Funktion der Saugwalze 32, von welcher das Bogenende schon abgelaufen ist). Spätestens mit dem Abschalten der Unterdruckbeaufschlagung der Saugkanäle 52, 54, vorzugsweise aber schon mit dem Abschalten der Druckbeaufschlagung der Blasleiste 70 wird durch die Steuereinheit 94 die Vakuumleiste 76 in die abgesenkte Arbeitsstellung gebracht und das 3/3-Magnetventil wird in seine erste Arbeitsstellung bewegt, in welcher die Vakuumleiste 76 mit Unterdruck beaufschlagt ist. Die Vakuumleiste 76 stellt nun eine in unmittelbarer Nähe des hinteren Endes der Ablagestation 12 liegende Bremse dar, die in ihrer Funktion mit der Saugwalze 32 vergleichbar ist, jedoch an der Bogenoberseite angreift.

Erreicht anschließend die Greiferstange 20 die Anschlagwand 24 und wird das vordere Bogenende von der Greiferstange 20 freigegeben, so wird durch die Steuereinheit 94 das 3/3-Magnetventil 86 für eine kurze Zeitspanne in seine zweite Arbeitsellung bewegt, wodurch das Innere der Vakuumleiste 76 mit Überdruck beaufschlagt wird. Dies erleichtert ein Ablösen des hinteren Bogenendes von der Vakuumleiste 76. Anschließend wird die Vakuumleiste wieder in die in der Zeichnung wiedergegebene Ruhestellung zurückbewegt.

Während der Pudergasversorgung des Blaskanales 46 tritt durch dessen Bestäubungsschlitz 64 eine homogene Mischung aus Druckluft und Puderpartikeln aus, welche gegen die Unterseite des Druckbogens gerichtet ist. Hierdurch wird der Druckbogen geringfügig angehoben, und es entstehen nun Strömungswege zu den beiden benachbarten Saugkanälen 52, 54, die längs der Unterseite des Druckbogens führen. Ein Teil der im Druckluftstrom mit getragenen Puderpartikel bleibt an der Unterseite des Druckbogens hängen, die restlichen Puderpartikel werden zusammen mit der Trägerluft dem Einlaß des Zyklons 56 zugeführt. Die dort abgeschiedene Pudermenge wird wieder an den Pudergasgenerator 58 zurückgeführt. Damit hat man bezüglich der Puderbestäubung einen im wesentlichen geschlossenen Kreislauf. Aus diesem Grunde ist es nicht notwendig, die am Ausgang des Gebläses 50 erhaltene Luft besonders zu reinigen. Nur die kleine Luftmenge, die entsprechend aus der Umgebung angesaugter zusätzlicher Luft über das Überdruckventil 88 abgeblasen werden muß, wird im Feinfilter 90 von Puderpartikeln befreit.

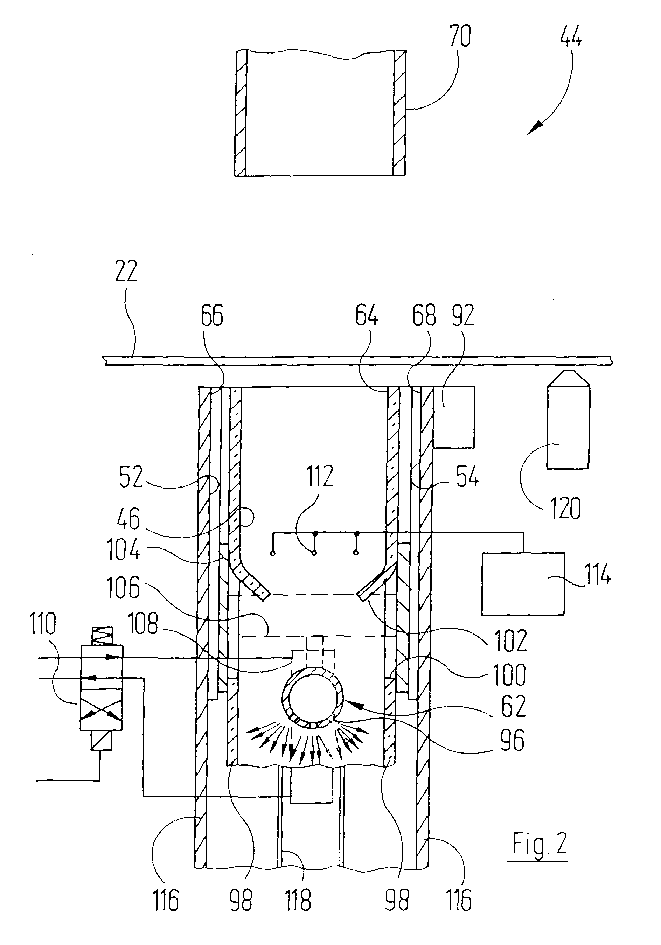

Bei der in Figur 2 gezeigten Bestäubungs-/Absaugeinheit 44 sind Komponenten, die von der Funktion her in Figur 1 schon gezeigten und oben erläuterten Komponenten entsprechen, wieder mit denselben Bezugszeichen versehen. Diese Komponenten werden nachstehend auch nicht nochmals im einzelnen beschrieben.

Wie aus Figur 2 ersichtlich, ist das Puderabgaberohr 62 unter größerem Abstand vom freien Ende des Blaskanales 46 im letzteren angeordnet. Drei Sätze in Winkelrichtung versetzter, axial hintereinanderliegender Pudergasabgabeöffnungen 96 sind in dem vom Bestäubungsschlitz 64 abgewandten Wandabschnitt des Puderabgaberohres 62 vorgesehen, so daß die Pudergaseinspeisung in den dem Blaskanal 46 zugeführten Luftstrom im Gegenstrom erfolgt.

Etwas oberhalb des Puderabgaberohres 62 sind in den Wänden 98 des Blaskanales 46 zwei Fenster 100 ausgestanzt, wobei beim oberen Fensterende Materiallappen 102 nach innen gekantet sind, welche zu einer starken Verwirbelung des an ihnen vorbeigeführten Luftstromes und damit zu einer innigen Vermischung zwischen Druckluft und Pudergas führen.

Auf der Außenseite der Wände 98 sind zwei Steuerplatten 104 im Gleitspiel verschiebbar, welche an ihren Enden durch Stege 106 verbunden sind. An den letzteren greifen die Kolbenstangen zweier doppelt wirkender Arbeitszylinder 108 an, die über ein 4/2-Magnetventil 110 wahlweise mit der Unterdruckleitung 36 bzw. der Druckluftleitung 74 verbindbar sind.

Die Steuerung des Magnetventiles 110 erfolgt wieder durch die Steuereinheit 94, wobei das Ventil unter Federvorspannung die in Figur 2 wiedergegebene Ruhestellung einnimmt, die während des Bestäubens der Druckbogen aufrechterhalten wird.

Stellt der Bogenfühler 92 fest, daß über ihm kein Abschnitt eines Druckbogens mehr liegt, so steuert die Steuereinheit 94 nach einer Zeitspanne, die sich aus dem Abstand zwischen Bogenfühler 92 und der stromabseitigen Kante der Bestäubungs-/Absaugeinheit 44 sowie der Fördergeschwindigkeit der Druckbogen errechnet, das Magnetventil 110 in seine Arbeitsstellung um, wodurch die beiden Steuerplatten 104 in Figur 2 nach oben gefahren werden. Durch dieses Verfahren der Steuerplatten wird ein direkter Kurzschlußweg aus dem Inneren des Blaskanales 46 in die Saugkanäle 52, 54 freigegeben, und da die Steuereinheit 94 für eine kleine Zeitspanne auch die Druckbeaufschlagung der Blasleiste 70 aufrechterhält, die gemäß Figur 2 eine Verlängerung des Blaskanales 46 darstellt, wird durch den Bestäubungsschlitz 64 Luft von oben in den Blaskanal 46 gedrückt. Auf diese Weise wird vermieden, daß zum Bestäuben verwendeter Puder direkt an die Umgebung abgegeben wird, wenn sich über den Bestäubungsschlitz 64 kein Druckbogen mehr befindet.

In Figur 2 sind ferner verschiedene sich in Längsrichtung durch den Blaskanal 46 erstreckene drahtförmige Elektroden 112 wiedergegeben, die mit dem Ausgang eines Hochspannungsgenerators 114 verbunden sind. Wie durch entsprechende Schraffur angedeutet, sind die Wände 98 des Blaskanales 46 aus einem isolierenden Material hergestellt, und auf diese Weise wird erreicht, daß die Puderpartikel beim Hindurchlaufen durch das von den Elektroden 112 erzeugte elektrische Feld aufgeladen werden. Diese Aufladung begünstigt ein Haftenbleiben der Puderpartikel auf der Unterseite des Druckbogens.

Die in Förderrichtung vordere und hintere Wand der Bestäubungs/Absaugeinheit trägt in der Zeichnung die Bezugszahl 116. Eine vordere und hintere Seitenwand der Bestäubungs/ Absaugeeinheit 44 ist jeweils mit einer vertikalen Eindrückung 118 versehen, die den benachbarten Arbeitszylinder 108 aufnimmt.

Etwas stromauf der Bestäubungs-/Absaugeinheit 44, auf deren. stromaufseitiger Gehäusewand der Bogenfühler 92 angebracht ist, ist eine Koronaentladungseinheit 120 wiedergegeben, welche zum elektrischen Aufladen der Unterseite der Druckbogen 22 dient. Auch diese Maßnahme erfolgt im Hinblick auf eine Verbesserung des Haftens von Puderpartikeln an den Druckbogen.

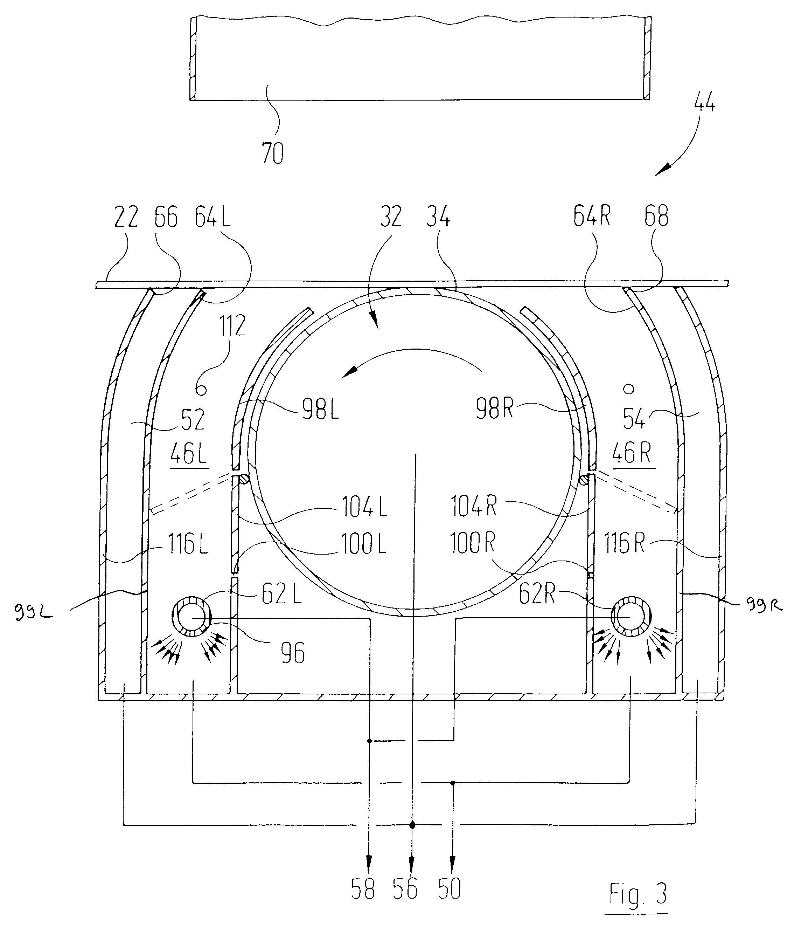

Auch bei dem Ausführungsbeispiel nach Figur 3 sind Komponenten, die funktional schon erläuterten Komponenten der Figuren 1 und 2 entsprechen, wieder mit denselben Bezugszeichen versehen. Der Hauptunterschied der Bestäubungs-/Absaugeinheit 44 nach Figur 3 zu derjenigen nach Figur 2 besteht darin, daß die eine poröse Umfangswand aufweisende Saugwalze 32 mit zum Rückführen verbrauchten Pudergases dient. Bei diesem Ausführungsbeispiel hat man zwei zu beiden Seiten der Saugwalze 32 angeordnete Blaskanäle 46L und 46R, die zwei Puderabgaberohre 62L und 62R aufnehmen. Die Wände 98L, 99L, 116L und 98R, 99R und 116R sind konzentrisch zur Saugwalze 32 gebogen. Die freien Enden der Wände 99L, 99R und 116L, 116R sind abgerundet und liegen in der Förderebene der Druckbogen 22, während die Enden der Wände 98L, 98R von der Druckbogen-Förderebene nach unten versetzt sind.

Der durch die Wände 98L und 98R begrenzte Raum ist ebenso wie die Saugkanäle 52, 54, die durch die Wände 99L, 99R und 116L, 116R begrenzt sind, mit dem Einlaß des Zyklons 56 verbunden.

Um wiederum eine direkte Verbindung zwischen den Blaskanälen 46L und 46R und dem Zykloneinlaß innerhalb der Bestäubungs-/Absaugeinheit 44 herstellen zu können, sind in den Fenstern 100L, 100R verschwenkbare Steuerplatten 104L, 104R vorgesehen, die durch ein in der Zeichnung nicht wiedergegebenes Gestänge mechanisch gekoppelt sind und mit der Kolbenstange eines sie bewegenden Arbeitszylinders verbunden sind (in Figur 3 nicht gezeigt), der dem Arbeitszylinder 108 von Figur 2 entspricht. Auf diese Weise können die Steuerplatten 104L und 104R aus der in der Zeichnung wiedergegebenen Ruhestellung in eine dort gestrichelt angedeutete Arbeitsstellung bewegt werden, in welcher eine direkte Absaugung aus den Blaskanälen 46L, 46R erfolgt. Durch die Blasleiste 70 wird wiederum restliches puderhaltiges Gas, welches nach Ablaufen des Druckbogens von der Bestäubungs-/Absaugeinheit 44 etwa noch abgegeben wird, ins Innere der Saugwalze 32 zurückgedrückt und von dort entsorgt.

Die Strömungsgeschwindigkeit des puderhaltigen Gases in der Bestäubungsleiste beträgt vorzugsweise mindestens 12 m/s.

## Patentansprüche

1. Puderbestäubungsgerät zum gleichförmigen Bestäuben der Unterseite blatt- oder bahnförmiger Produkte mit feinem Puder, mit einem Pudergasgenerator (58), der einen Gasstrom mit von diesem mitgeschleppten Puderpartikeln herstellt, mit einer mindestens eine Abgabeöffnung (64; 64L, 64R) aufweisenden Bestäubungsleiste (46, 62; 46L, 62L, 46R, 62R), die an den Pudergasgenerator (58) angeschlossen ist und mit nach oben weisender Abgabeöffnung (64; 64L, 64R) an einem Halterahmen (40) angebracht ist, und mit einer der Bestäubungsleiste (46, 62; 46L, 62L, 46R, 62R) zugeordneten Absaugeinrichtung (52, 54; 52, 54, 32) für vom Produkt (22) zurückströmendes puderhaltiges Gas, welche sich im wesentlichen über die Breite der Bestäubungsleiste (46, 62; 46L, 62L, 46R, 62R) erstreckt und zur Unterseite der Produkte (22) hin offen ist, wobei die Absaugeinrichtung (52, 54; 32, 52, 54) zwei flache Saugkanäle (52, 54) aufweist, die stromauf bzw. stromab der Bestäubungsleiste (46, 62; 46L, 62L, 46R, 62R) angeordnet sind, und wobei die Bestäubungsleiste (46, 62; 46L, 62L, 46R, 62R) in Förderrichtung der Produkte gesehen kurz ist, dadurch gekennzeichnet, daß die Bestäubungsleiste (46, 62; 46L, 62L, 46R, 62R) eine durch beabstandete Platten (98; 98L, 99L, 98R, 99R) begrenzte Mischkammer aufweist, die mit einer Druckgasquelle (50) verbindbar (48) ist, und daß in der Mischkammer ein Puderabgaberohr (62; 62L, 62R) für einen puderhaltigen Gasstrom angeordnet ist, welches sich senkrecht zu einem Blasgasstrom erstreckt und mit in Längsrichtung verteilten Abgabeöffnungen (96) versehen ist.

2. Puderbestäubungsgerät nach Anspruch 1, dadurch gekennzeichnet, daß die Abgabeöffnung (64; 64L, 64R) der Bestäubungsleiste (46, 62; 46L, 62L, 46R, 62R) und die offenen Enden der Saugkanäle (52, 54; 52, 54) im wesentlichen in derselben Ebene liegen.

3. Puderbestäubungsgerät nach Anspruch 1 oder 2, dadurch gekennzeichnet, daß die Strömungsgeschwindigkeit des puderhaltigen Gases in der Bestäubungsleiste (46, 62; 46L, 62L, 46R, 62R) mindestens 12 m/s beträgt.

4. Puderbestäubungsgerät nach einem der Ansprüche 1 bis 3, dadurch gekennzeichnet, daß die Abgabeöffnung (64; 64L, 64R) das Ende eines sich über die Breite der Produkte (22) erstreckenden Blaskanales (46; 46L, 46R) ist.

5. Puderbestäubungsgerät nach einem der Ansprüche 1 bis 4, dadurch gekennzeichnet, daß die Abgabeöffnungen (96) des Puderabgaberohres (62; 62L, 62R) in einem vom Blasgasstrom angeströmtem Wandbereich des Puderabgaberohres (62; 62L, 62R) vorgesehen sind.

6. Puderbestäubungsgerät nach einem der Ansprüche 1 bis 5, gekennzeichnet durch in der Mischkammer angeordnete Wirbel erzeugende Wandelemente (102).

7. Puderbestäubungsgerät nach einem der Ansprüche 1 bis 6, gekennzeichnet durch mindestens eine in der Bestäubungsleiste (46, 62) angeordnete Elektrode (112) zum elektrischen Aufladen der Puderpartikel, welche mit einem Hochspannungsgenerator (114) verbunden ist.

8. Puderbestäubungsgerät nach einem der Ansprüche 1 bis 7, gekennzeichnet durch eine Einrichtung (120) zum Aufladen der Unterseite der Produkte (22), welche stromauf der Bestäubungsleiste (46, 62) angeordnet ist.

9. Puderbestäubungsgerät nach Anspruch 7 oder 8, dadurch gekennzeichnet, daß die Elektrode (112) die Puderpartikel mit einer Polarität auflädt, die zu derjenigen Polarität entgegengesetzt ist, mit welcher die Aufladeeinrichtung (120) die Unterseite der Produkte (22) auflädt.

10. Puderbestäubungsgerät nach einem der Ansprüche 1 bis 9, gekennzeichnet durch eine über der Bahn der Produkte (22) in solchem Abstand angeordneter Blasleiste (70), daß Greiferstangen (20) zum Bewegen der Produkte (22) frei unter ihr hindurchlaufen können, welche mit einer Druckgasquelle (74) verbindbar (72) ist und mindestens eine Austrittsöffnung aufweist, die zur Oberseite der Produkte (22) weist.

11. Puderbestäubungsgerät nach Anspruch 10, dadurch gekennzeichnet, daß die in Produktförderrichtung genommene Abmessung der Austrittsöffnung der Blasleiste (70) und der Abgabeöffnung (64; 64L, 64R) der Bestäubungsleiste (46, 62; 46L, 62L, 46R, 62R) im wesentlichen gleich groß sind.

12. Puderbestäubungsgerät nach einem der Ansprüche 1 bis 11, gekennzeichnet durch einen stromauf der Bestäubungsleiste (46, 62 ; 46L, 62L, 46R, 62R) angeordneten Produktfühler (92).

13. Puderbestäubungsgerät nach Anspruch 12, dadurch gekennzeichnet, daß der Innenraum der Bestäubungsleiste (46, 62; 46L, 62L, 46R, 62R) über eine in Abhängigkeit vom Ausgangssignal des Produktfühlers (92) gesteuerte Verschlußteilanordnung (104; 104L, 104R) mit mindestens einem der Saugkanäle (52, 54; 52, 54) verbindbar ist.

14. Puderbestäubungsgerät nach Anspruch 12 oder 13, gekennzeichnet durch eine stromab des stromabseitigen Saugkanales (52) angeordnete und mit der Oberseite der Produke (22) zusammenarbeitende Vakuumleiste (76) die in Abhängigkeit vom Ausgangssignal des Produktfühlers (92) in und aus der Bahn der Produkte (22) bewegbar (82) und mit einer Unterdruckquelle (36) verbindbar (86) ist.

15. Puderbestäubungsgerät nach Anspruch 14, dadurch gekennzeichnet, daß die Vakuumleiste (76) zusätzlich in Abhängigkeit vom Ausgangssignal des Produktfühlers (92) mit einer Druckgasquelle (74) verbindbar (86) ist.

16. Puderbestäubungsgerät nach einem der Ansprüche 1 bis 15, dadurch gekennzeichnet, daß die Saugkanäle (52, 54; 52, 54) über einen Zyklon (56) mit dem Eingang eines Gebläses (50) verbunden sind.

17. Puderbestäubungsgerät nach Anspruch 16, dadurch gekennzeichnet, daß der Schwerfraktionsauslaß des Zyklons (56) mit einem Puder-Speiseeingang des Pudergasgenerators (58) verbunden ist.

18. Puderbestäubungsgerät nach einem der Ansprüche 1 bis 17, dadurch gekennzeichnet, daß die Bestäubungsleiste (46L, 62L, 46R, 62R) mindestens einen zu einer porösen Saugwalze (32) konzentrischen Blaskanal (46L, 46R) aufweist, und die Saugkanäle (52, 54) ebenfalls konzentrisch zur Saugwalze (32) außerhalb der Blaskanäle (46L, 46R) verlaufen, so daß durch die Saugwalze (32) ebenfalls vom Produkt reflektiertes puderhaltiges Gas zurückgesaugt wird.

## Claims

1. Powder dusting appliance for uniformly dusting the underside of sheet- or web-shaped products with fine powder, with a powdered gas generator (58), which produces a gas stream with powder particles entrained by the latter, with a dusting strip (46, 62; 46L, 62L, 46R, 62R), which comprises at least one discharge opening (64; 64L, 64R), is connected to the powdered gas generator (58) and is mounted on a holding frame (40) with its discharge opening (64; 64L, 64R) pointing upwards, and with a suction device (52, 54; 52, 54, 32), which is associated with the dusting strip (46, 62; 46L, 62L, 46R, 62R), for powdered gas flowing back from the product (22), which device extends substantially over the width of the dusting strip (46, 62; 46L, 62L, 46R, 62R) and is open towards the underside of the products (22), wherein the suction device (52, 54; 32, 52, 54) comprises two shallow suction ducts (52, 54), which are disposed upstream and downstream, respectively, of the dusting strip (46, 62; 46L, 62L, 46R, 62R), and wherein the dusting strip (46, 62; 46L, 62L, 46R, 62R) is short when viewed in the delivery direction of the products, characterised in that the dusting strip (46, 62; 46L, 62L, 46R, 62R) comprises a mixing chamber which is bounded by spaced plates (98; 98L, 99L, 98R, 99R) and can be connected (48) to a compressed-gas source (50), and that a powder discharge tube (62; 62L, 62R) for a powdered gas stream is disposed in the mixing chamber, which tube extends perpendicularly to a blast gas stream and is provided with discharge openings (96) distributed in the longitudinal direction.

2. Powder dusting appliance according to Claim 1, characterised in that the discharge opening (64; 64L, 64R) of the dusting strip (46, 62; 46L, 62L, 46R, 62R) and the open ends of the suction ducts (52, 54; 52, 54) lie substantially in the same plane.

3. Powder dusting appliance according to Claim 1 or 2, characterised in that the flow speed of the powdered gas in the dusting strip (46, 62; 46L, 62L, 46R, 62R) is at least 12 m/s.

4. Powder dusting appliance according to any one of Claims 1 to 3, characterised in that the discharge opening (64; 64L, 64R) is the end of a blast duct (46; 46L, 46R) extending over the width of the products (22).

5. Powder dusting appliance according to any one of Claims 1 to 4, characterised in that the discharge openings (96) of the powder discharge tube (62; 62L, 62R) are provided in a wall region of the powder discharge tube (62; 62L, 62R) against which the blast gas stream flows.

6. Powder dusting appliance according to any one of Claims 1 to 5, characterised by wall elements (102), which produce an eddy, disposed in the mixing chamber.

7. Powder dusting appliance according to any one of Claims 1 to 6, characterised by at least one electrode (112) disposed in the dusting strip (46, 62) for electrically charging the powder particles, which electrode is connected to a high-voltage generator (114).

8. Powder dusting appliance according to any one of Claims 1 to 7, characterised by a device (120) for charging the underside of the products (22), which device is disposed upstream of the dusting strip (46, 62).

9. Powder dusting appliance according to Claim 7 or 8, characterised in that the electrode (112) charges the powder particles with a polarity which is opposite to that with which the charging device (120) charges the underside of the products (22).

10. Powder dusting appliance according to any one of Claims 1 to 9, characterised by a blast strip (70) which is disposed above the path of the products (22) at a spacing such that gripper rods (20) can pass through freely under it to move the products (22), can be connected (72) to a compressed-gas source (74) and comprises at least one outlet opening pointing towards the top side of the products (22).

11. Powder dusting appliance according to Claim 10, characterised in that, considered in the product delivery direction, the dimension of the outlet opening of the blast strip (70) and that of the discharge opening (64; 64L, 64R) of the dusting strip (46, 62; 46L, 62L, 46R, 62R) are substantially the same.

12. Powder dusting appliance according to any one of Claims 1 to 11, characterised by a product sensor (92) disposed upstream of the dusting strip (46, 62; 46L, 62L, 46R, 62R).

13. Powder dusting appliance according to Claim 12, characterised in that the interior space of the dusting strip (46, 62; 46L, 62L, 46R, 62R) can be connected to at least one of the suction ducts (52, 54; 52, 54) via a closure part arrangement (104; 104L, 104R) controlled in accordance with the output signal of the product sensor (92).

14. Powder dusting appliance according to Claim 12 or 13, characterised by a vacuum strip (76) which is disposed downstream of the suction duct (52) on the downstream side, co-operates with the top side of the products (22), can be moved (82) into and out of the path of the products (22) and connected (86) to an underpressure source (36) in accordance with the output signal of the product sensor (92).

15. Powder dusting appliance according to Claim 14, characterised in that the vacuum strip (76) can additionally be connected (86) to a compressed-gas source (74) in accordance with the output signal of the product sensor (92).

16. Powder dusting appliance according to any one of Claims 1 to 15, characterised in that the suction ducts (52, 54; 52, 54) are connected to the inlet of a blower (50) via a cyclone (56).

17. Powder dusting appliance according to Claim 16, characterised in that the heavy fraction outlet of the cyclone (56) is connected to a powder feed inlet of the powdered gas generator (58).

18. Powder dusting appliance according to any one of Claims 1 to 17, characterised in that the dusting strip (46L, 62L, 46R, 62R) comprises at least one blast duct (46L, 46R) which is concentric with a porous suction roll (32), and the suction ducts (52, 54) also extend concentrically with the suction roll (32) outside of the blast ducts (46L, 46R), so that powdered gas also reflected from the product is sucked back by the suction roll (32).

## Revendications

1. Appareil de saupoudrage destiné à saupoudrer uniformément une poudre fine sur des produits en forme de feuille ou de bande, comprenant un générateur de gaz de saupoudrage (58) qui génère un flux de gaz contenant des particules de poudre en suspension, comprenant également une barre de saupoudrage (46, 62 ; 46L, 62L, 46R, 62R) présentant au moins un orifice de sortie (64 ; 64L, 64R), qui est reliée au générateur de gaz de saupoudrage (58) et est fixée à un bâti (40) avec l'orifice de sortie (64 ; 64L, 64R) pointant vers le haut, ainsi qu'un dispositif d'aspiration (52, 54 ; 52, 54, 32) associé à la barre de saupoudrage (46, 62; 46L, 62L, 46R, 62R) pour aspirer le gaz chargé de poudre qui reflue du produit (22), lequel s'étend essentiellement sur la largeur de la barre de saupoudrage (46, 62; 46L, 62L, 46R, 62R) et est ouvert en direction de la face inférieure des produits (22), sachant que le dispositif d'aspiration (52, 54 ; 32, 52, 54) présente deux canaux d'aspiration plats (52, 54) qui sont disposés respectivement en amont et en aval de la barre de saupoudrage (46, 62; 46L, 62L, 46R, 62R), la barre de saupoudrage (46, 62; 46L, 62L, 46R, 62R) étant courte vue dans la direction d'avancement des produits, caractérisé en ce que la barre de saupoudrage (46, 62 ; 46L, 62L, 46R, 62R) présente une chambre de mélange délimitée par des plaques espacées (98 ; 98L, 99L, 98R, 99R), qui peut être reliée (48) à une source de gaz sous pression (50), et en ce que dans la chambre de mélange est placé un tuyau distributeur de poudre (62 ; 62L, 62R) pour un flux gazeux contenant de la poudre, qui s'étend perpendiculairement à un flux de gaz soufflé et est muni d'orifices de sortie (96) répartis dans la direction longitudinale.

2. Appareil de saupoudrage selon la revendication 1, caractérisé en ce que l'orifice de sortie (64 ; 64L, 64R) de la barre de saupoudrage (46, 62 ; 46L, 62L, 46R, 62R) et les extrémités ouvertes des canaux d'aspiration (52, 54 ; 52, 54) sont pour l'essentiel situés dans le même plan.

3. Appareil de saupoudrage selon la revendication 1 ou 2, caractérisé en ce que la vitesse de circulation du gaz contenant la poudre dans la barre de saupoudrage (46, 62 ; 46L, 62L, 46R, 62R) est d'au moins 12 m/s.

4. Appareil de saupoudrage selon l'une des revendications 1 à 3, caractérisé en ce que l'orifice de sortie (64 ; 64L, 64R) est l'extrémité d'un canal soufflant (46 ; 46L, 46R) s'étendant sur la largeur des produits (22).

5. Appareil de saupoudrage selon l'une des revendications 1 à 4, caractérisé en ce que les orifices de sortie (96) du tuyau distributeur de poudre (62; 62L, 62R) sont prévus dans une zone de paroi du tuyau distributeur de poudre (62 ; 62L, 62R) qui est balayée par le flux de gaz soufflé.

6. Appareil de saupoudrage selon l'une des revendications 1 à 5, caractérisé par des éléments de paroi (102) dans la chambre de mélange qui génèrent un cyclone.

7. Appareil de saupoudrage selon l'une des revendications 1 à 6, caractérisé par au moins une électrode (112) située dans la barre de saupoudrage (46, 62), qui est destinée à charger électriquement les particules de poudre et qui est reliée à un générateur de haute tension (114).

8. Appareil de saupoudrage selon l'une des revendications 1 à 7, caractérisé par un dispositif (120) pour charger la face inférieure des produits (22), qui est situé en amont de la barre de saupoudrage (46, 62).

9. Appareil de saupoudrage selon la revendication 7 ou 8, caractérisé en ce que l'électrode (112) charge les particules de poudre avec une polarité qui est opposée à celle que confère le dispositif chargeur (120) à la face inférieure des produits (22).

10. Appareil de saupoudrage selon l'une des revendications 1 à 9, caractérisé par une barre soufflante (70) placée au-dessus de la trajectoire des produits (22) avec un écartement tel que des barres de préhension (20) destinées à déplacer les produits (22) peuvent défiler librement sous elle, qui peut être reliée (72) à une source de gaz sous pression (74) et présente au moins un orifice de sortie pointant vers le dessus des produits (22).

11. Appareil de saupoudrage selon la revendication 10, caractérisé en ce que les dimensions de l'orifice de sortie de la barre soufflante (70) et de l'orifice de sortie (64; 64L, 64R) de la barre de saupoudrage (46, 62 ; 46L, 62L, 46R, 62R) mesurées dans la direction d'avancement des produits sont pour l'essentiel identiques.

12. Appareil de saupoudrage selon l'une des revendications 1 à 11, caractérisé par un capteur de produits (92) placé en amont de la barre de saupoudrage (46, 62 ; 46L, 62L; 46R, 62R).

13. Appareil de saupoudrage selon la revendication 12, caractérisé en ce que l'espace intérieur de la barre de saupoudrage (46, 62 ; 46L, 62L; 46R, 62R) peut être relié à au moins l'un des canaux d'aspiration (52, 54; 52, 54) par l'intermédiaire d'un dispositif d'obturation (104; 104L; 104R) commandé en fonction du signal de sortie du capteur de produits (92).

14. Appareil de saupoudrage selon la revendication 12 ou 1.3, caractérisé par une barre à faire le vide (76) placée en aval du canal d'aspiration aval (52) et coopérant avec le dessus des produits (22), qui peut être déplacée (82), en fonction du signal de sortie du capteur de produits (92), sur la trajectoire des produits (22) ou hors de celle-ci, et qui peut être reliée (86) à une source de vide (36).

15. Appareil de saupoudrage selon la revendication 14, caractérisé en ce que la barre à faire le vide (76) peut en plus être reliée (86) à une source de gaz sous pression (74) en fonction du signal de sortie du capteur de produits (92).

16. Appareil de saupoudrage selon l'une des revendications 1 à 15, caractérisé en ce que les canaux d'aspiration (52, 54 ; 52, 54) sont reliés par un cyclone (56) à l'entrée d'une soufflante (50).

17. Appareil de saupoudrage selon la revendication 16, caractérisé en ce que la sortie de la fraction lourde du cyclone (56) est reliée à une entrée de poudre alimentant le générateur de gaz de saupoudrage (58).

18. Appareil de saupoudrage selon l'une des revendications 1 à 17, caracténsé en ce que la barre de saupoudrage (46L, 62L, 46R, 62R) présente au moins un canal soufflant (46L, 46R) concentrique par rapport à un cylindre d'aspiration poreux (32), et en ce que les canaux d'aspiration (52, 54) s'étendent également de façon concentrique par rapport au cylindre d'aspiration (32), en dehors des canaux soufflants (46L, 46R), si bien que le cylindre d'aspiration (32) aspire également le gaz chargé de poudre qui est renvoyé par le produit.
